# EUROPEAN PATENT APPLICATION

(11) **EP 4 489 034 A1**
(43) Date of publication of application: **08.01.2025**
(21) Application number: 23306133.2
(22) Date of filing: 05.07.2023
(51) Int. Cl.: H01B 7/22, H01B 9/00, G02B 6/46

(54) **METHOD FOR MANUFACTURING A COMPOSITE ELECTRIC POWER CABLE**

(71) Applicant: Nexans, 92400 Courbevoie (FR)
(72) Inventor: MARTHINSEN, Martin Andreas, 1746 Skjeberg (NO); CLARKE, Cicilie, 1726 Sarpsborg (NO); EYSSAUTIER, Quentin, 1734 Haflsundoy (NO)
(74) Representative: Ipsilon

(57) **Abstract**

The present invention relates to a method (30) for manufacturing a composite electric power cable (20), the method (30) comprising the steps of:
- assembling (32) inner layers (21) of the composite electric power cable (20), wherein the inner layers include at least one electric conductor (27),
- adding (34) an armoring layer (26) with at least one fiber optic element (23) by winding a plurality of armoring wires (22) helically around the inner layers (21), and winding the at least one fiber optic (23) element between at least two of the armoring wires (22). The present invention also relates to a composite electric power cable (20) manufactured according to the method.

## Description

### FIELD OF THE INVENTION

The present invention relates to a method for manufacturing a composite electric power cable, and a method for repairing a composite electric power cable, notably manufactured by said method. The present invention also relates to a composite electric power cable.

### BACKGROUND OF THE INVENTION

Submarine HVDC (High Voltage Direct Current) power cables are widely used to transport electric current at high voltage over large distances. Such cables are often three-core or three-phase cables, comprising three individual cores/conductors. Modern three-core cables (e.g. for the connection of offshore wind turbines) often carry optical fibers for data transmission or temperature measurement, in addition to the electrical conductors.

Such cables are exposed to many factors both during and after production, such as during spooling from the armoring process to the turntable, load-out from turntable in the factory to turntable on a vessel, during installation and after installation.

A particular challenge is that optical fiber has low mechanical strength in general, making several of the processes above critical. Moreover, local bending or so-called microbend can cause the transmission characteristic of an optical fiber to be deteriorated significantly.

In some cases where an optical fiber is limited in length due to the bobbin of a rolling device or the like, several lengths of optical fiber must be joined to provide the desired length/match the length of the power cable it is combined with. Such joints can be weak points and prone to damages, and/or the joints are spacious, thus increasing the diameter of the cable either at the joint locations or the overall cable diameter.

Further, if damage occurs in the optical fiber, repair processes are complicated and expensive.

To alleviate these problems, the optical fiber is often provided as FIMT (fiber in metallic tube) between layers in the power cable, for example between lead layer and plastic sheath. The FIMT is applied longitudinally on the lead sheath layer of the cable after its extrusion on the power cable. Then a plastic sheath, such as PE (polyethylene) sheath, is extruded onto the FIMT, recovering and protecting both the lead layer and the FIMT.

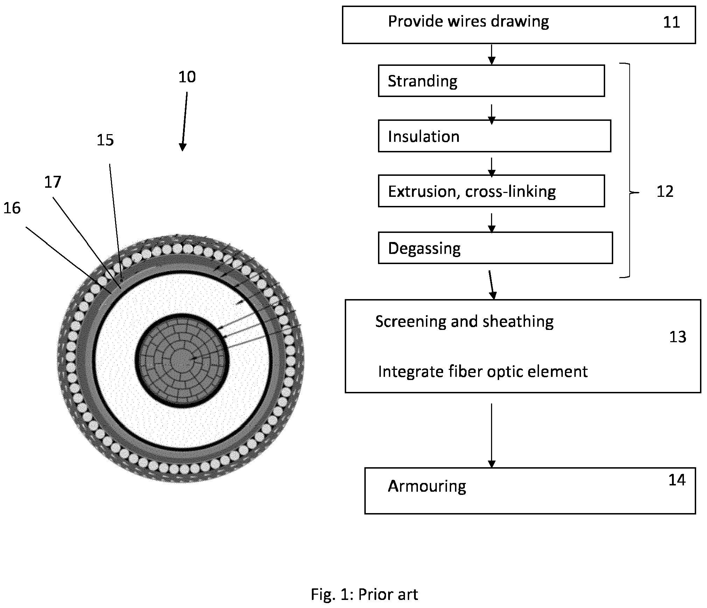

Figure 1 illustrates a prior art method for manufacturing a composite electric power cable 10.

The cable 10 has a number of different inner layers which are provided in a first step 12, for example by conductor stranding, providing insulation system, extrusion and cross linking, and degassing. In a next step 13 of screening and sheathing, one or several fiber optic elements 15 are integrated in the cable. In the example of figure 1, there is one fiber optic element 15, which is an element known as fiber in metallic tube, FIMT. During manufacturing, the fiber optic element 15 can for example be laid out on a bedding tape 16 that extends longitudinal along the length of the cable on the outer surface of a lead sheath 17. The fiber optic element 15 is normally laid out in a wave pattern to compensate for lengthening during bending of the cable 10.

Over the lead sheath 17, and over the fiber optic element 15, there is provided an armoring layer in step 14. There may be provided further layers over the fiber optic elements and the inner layers of the power cable, such as outer serving polypropylene (PP) yarn or other outer protection layer.

This solution has some drawbacks, for example that the minimum allowable bending radius of the cable is very high and need large turntables for both production and installation. The largest challenge is during installation as few installation vessels have large enough turntable for this design. Another challenge is when the cable is not handled correctly during the installation due to stringent requirements induced by the FIMT placement in the cable design.

EP0646817 describes use of a jointing cabinet which is arranged in top of the cable. As the cabinet is arranged onto the cable, the stiffness and diameter of the jointing area increases significantly.

CN202601292U describes embedding a fiber optic cable in an armoring layer of a cable.

There is thus a need for a more robust way of including fiber optic elements in cables, as well as an improved repair method in case the optical fiber is damaged after production.

A first object of the invention is a method for manufacturing a composite electric power cable.

A second object of the invention is a method for repairing a composite electric power cable, notably manufactured by the method according to the first object of the invention.

A third object of the invention is a composite electric cable.

### SUMMARY OF THE INVENTION

The present invention relates to a method for manufacturing a composite electric power cable, the method comprising the steps of:
- assembling inner layers of the composite electric power cable, wherein the inner layers comprise at least one electric conductor, and
- adding an armoring layer with at least one fiber optic element, by winding a plurality of armoring wires helically around the inner layers, and winding the at least one fiber optic element between at least two of the armoring wires.

By the term "composite electric power cable", it should be understood a power cable that comprises both electric and data conductors, in this invention there is at least one electric conductor for conducting power and at least one fiber optic element that can transmit data.

The winding of the plurality of armoring wires helically around the inner layers and the winding of the at least one fiber optic element between at least two of the armoring wires may be performed simultaneously, for example in one operation.

The winding of the at least one fiber optic element between at least two of the armoring wires, has the effect of at least one armoring wire in the armoring layer being replaced/substituted by the fiber optic element in the resulting layer.

The armoring wires may be any suitable kind of wire, for example steel wire with an outer diameter suitable for the purpose of the composite electric power cable.

The at least on fiber optic element may be arranged within a tube, notably a metallic tube. The step of adding the armoring layer with the at least one fiber optic element will then comprise the step of winding the tube helically around the inner layers.

The fiber optic element arranged within a tube may be for example a FIMT (Fiber in metallic Tube), which is a construction that has optical fibers encased by a thin walled metal tube that is typically made out of stainless steel but can be of other highly corrosion resistant metals. Other kinds of tubes may also be used, for example the tube material may also be a composite or other suitable material with sufficient resistance towards impacts and with suitable bending stiffness.

The thickness/outer diameter of the cross section of the tube may be different according to different demands on the cable. For example, the outer diameter of the tube for the fiber optic element may be equal to or smaller than the outer diameter of the armoring wires. As the tube(s) with fiber optic element(s) is (are) arranged in the same layer as the armoring wires, it is advantageous that they do not project further out than the armoring wires, as this will expose the fiber optic element to impacts and possible damage. When the outer diameter of the tube for the fiber optic element is the same as the outer diameter of the armoring wires, any impacts on the power cable will be distributed similarly over the armoring wires and the tube with fiber optic element. However, if the outer diameter of the tube is smaller than the outer diameter of the armoring wires, the armoring wires will take more of the load from the impact, thus shielding the fiber optic element from damage.

By "outer diameter", it should be understood the outer diameter of the cross section of the element of interest, for example power cable or any wire or tube that is part of the power cable.

The tube may for example have an outer diameter of 40% to 120% of the outer diameter of the armoring wires, or the tube may have an outer diameter of ca. 50% to ca. 100% of the outer diameter of the armoring wires.

The composite electric power cable may be a submarine high voltage direct current power cable.

The present invention also relates to a method for repairing a composite electric power cable, notably manufactured by the method described above.

The method for repairing a composite electric power cable comprises the steps of:
- identifying a location of a break or failure in the fiber optic element;
- making a first cut of the fiber optic element on a first side of the identified location;
- making a second cut of the fiber optic element on a second side of the identified location;
- removing a section of the fiber optic element between the first and second cut;
- providing a replacement section of optical fiber having a length at least equal to the removed section of fiber optic element;
- splicing a first end of the replacement section to the first cut of the fiber optic element, forming a first spliced region;
- splicing a second end of the replacement section to the second cut of the fiber optic element, forming a second spliced region;
- arranging a first fiber optic joint closure over the first spliced region; and
- arranging a second fiber optic joint closure over the second spliced region.

The method may also comprise the step of:
- arranging the first and second fiber optic joint closures over the armoring layer and securing the first and second fiber optic joint closures to the armoring layer by means of tape or clamps.

The step of providing a replacement section of optical fiber may comprise providing a replacement section that is longer than the removed section. This will form an overlength of optical fiber, and to take care of the overlength to ensure that the fiber optic element is not unduly exposed to damage due to the overlength, the overlength is arranged inside at least one of the first and/or second fiber optic joint closures. The overlength may for example be coiled into the fiber optic joint closures.

The composite electric power cable may be a submarine high voltage direct current power cable.

The present invention also relates to a composite electric power cable comprising:
- inner layers comprising at least one electric conductor,
- an armoring layer comprising at least one fiber optic element, wherein the armoring layer comprises a plurality of armoring wires wound helically around the inner layers, and wherein at least one of the armoring wires is substituted by the at least one fiber optic element.

The at least one fiber optic element is therefore wound between at least two of the armoring wires.

As described above, having the at least one fiber optic element wound between at least two of the armoring wires, gives an armoring layer where in effect at least one of the armoring wires is substituted by the at least one fiber optic element.

The at least one fiber optic element may be arranged within a tube, and the tube may be wound helically around the inner layers.

The tube may be a metallic tube, such as stainless steel or other steel alloy.

The tube may have an outer diameter of 40% to 120% of the outer diameter of the armoring wires, more specifically the tube may have an outer diameter of ca. 50% to ca. 100% of the outer diameter of the armoring wires.

The composite electric power cable may be a submarine high voltage direct current power cable.

### LIST OF DRAWINGS

Figure 1 illustrates a prior art method for manufacturing a composite electric power cable.
Figure 2 shows a cross section of a composite electric power cable with a fiber optic element in the armoring layer according to the present invention.
Figure 3 illustrates schematically a method for manufacturing a composite electric power cable according to the present invention.
Figure 4 illustrates schematically a method for repairing a composite electric power cable according to the present invention, in particular for repairing a fiber optic element in a composite electric power cable according to the present invention.
Figure 5a-5f illustrates schematically stages of a composite electric power cable during repair of a fiber optic element.
Figure 6 illustrates schematically a composite electric power cable according to the present invention, with an armoring layer with at least one fiber optic element fiber wound helically around inner layers of the composite electric power cable.

### DETAILED DESCRIPTION

The invention will now be described in more detail by using examples of embodiments and with reference to the above drawings.

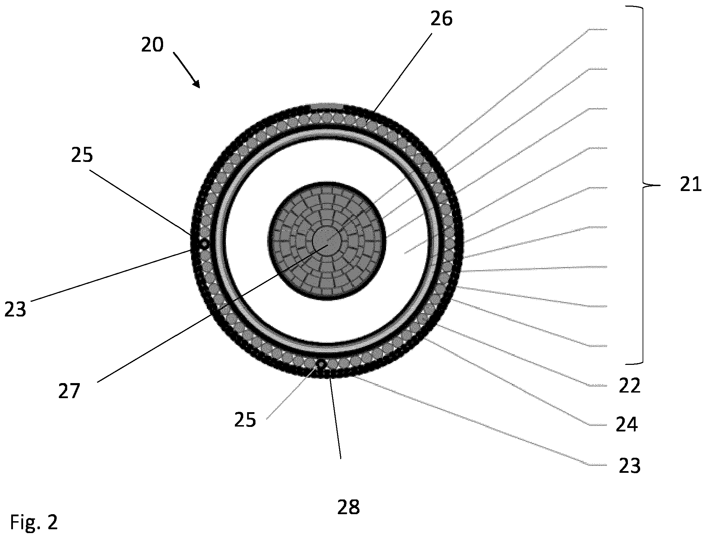

It is now referred to Figure 2, which shows a cross section of an example of a composite electric power cable according to the present invention.

The composite electric power cable 20 comprises a number of inner layers 21 necessary for the specific cable use, such as at least one electric conductor 27, screens and insulation layers. Outside the inner layers 21, there are arranged an armoring layer 26 and at least one fiber optic element 23 in the armoring layer 26. The armoring layer 26 comprises armoring wires 22 which are wound helically around the inner layers of the power cable 20, and the fiber optic elements 23 are similarly wound helically around the inner layers 21 of the power cable 20. In the present embodiment, at least one of the armoring wires 22 is replaced/substituted by a fiber optic element 23. In figure 2, there are illustrated two fiber optic elements 23, but there may be only one, or there may be more, according to the specific need for any particular composite electric power cable.

An outer protecting layer 28 is added at the outside of the armoring layer 26 to seal the composite electric power cable 20 and to add further protections against impacts. The outer protecting layer 28 may for example be a polypropylene (PP) yarn, a PVC sheath or other type of outer protection layer that holds all components of the cable together and provides additional protection from external stresses.

In the embodiment in figure 2, the fiber optic element is arranged within a tube 25. The tube 25 is in this embodiment a metallic tube, such as stainless steel, or other metal alloy. Alternatively, the material may be a composite or other suitable material with sufficient resistance towards impacts and with suitable bending stiffness.

The tube 25 with the fiber optic element 23 is thus wound helically around the inner layers 21 of the power cable 20 between the armoring wires 22.

The tube 25 can have different characteristics, for example the thickness/outer diameter of the cross section of the tube may be different according to the demands on the cable. For example, the outer diameter of the tube 25 may be equal to or smaller than the outer diameter of the armoring wires 22. In the example of figure 2, the outer diameter of the tube 25 is substantially the same as the outer diameter of the armoring wires 22.

An added benefit of smaller outer diameter of the tube 25 compared to the outer diameter of the armoring wires 22, is that a longer length of fiber optic element in the tube can be spooled onto a bobbin without increasing the size of the bobbin. This simplifies production of the power cable 20.

A disadvantage with smaller outer diameter of the tube 25 compared to the outer diameter of the armoring wires 22, is that the tube and thus the fiber optic element can experience squeezing between adjacent armoring wires 22, which unduly can impact the fiber optic element within the tube 25.

It has been found that a ratio between the outer diameter of the tube 25 and the outer diameter of the armoring wires 22 preferably can be 1:2, i.e. that the outer diameter of the tube 25 containing the fiber optic element 23 is half the outer diameter of the armoring wires 22.

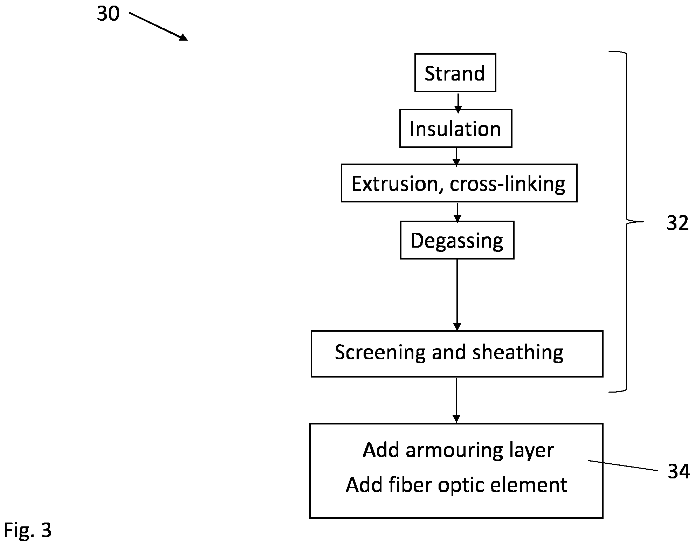

It is now referred to figure 3 where the steps of a method 30 for manufacturing of the power cable 20 according to the present invention is shown.

A number of inner layers are assembled in step 32, for example by conductor stranding, insulation system extrusion, cross linking and degassing. The number of layers and types of layers may vary according to the type of power cable and the intended use of the power cable, but for power cables at least one electric conductor 27 is provided. In this example, the inner layers 21 of the power cable 20 are overlayed with screening and sheathing.

After the screening and sheeting, the armoring layer 26 with at least one fiber optic element 23 are added in step 34. The armoring layer 26 is provided in step 34 by winding a plurality of armoring wires 22 helically around the inner layers 21. The at least one fiber optic element 23 is similarly wound helically around the inner layers 21. The winding of armoring wires 22 and the at least one fiber optic element 23 is performed in such a way that at least one armoring wire is replaced by the at least one fiber optic element 23 so that the at least one fiber optic element 23 is arranged between at least two armoring wires 22. This results in that the at least one fiber optic element 23 is integrated or embedded in the armoring layer 26.

The winding of the plurality of armoring wires 22 helically around the inner layers 21, and the winding of the at least one fiber optic element 23 between at least two of the armoring wires 22 may be done simultaneously. This can be done by substituting one of the armoring wires 22 with the at least one fiber optic element 23 during the winding, for example by substituting one of the bobbins feeding armoring wire with a bobbin feeding fiber optic element. The winding of at least one fiber optic element 23 between at least two of the armoring wires 22, has the effect of at least one armoring wire 22 in the armoring layer 26 being replaced/substituted by a fiber optic element 23 in the resulting layer.

Even if the present invention provides a more robust incorporated fiber optic element in a power cable, breaks and failure may occur.

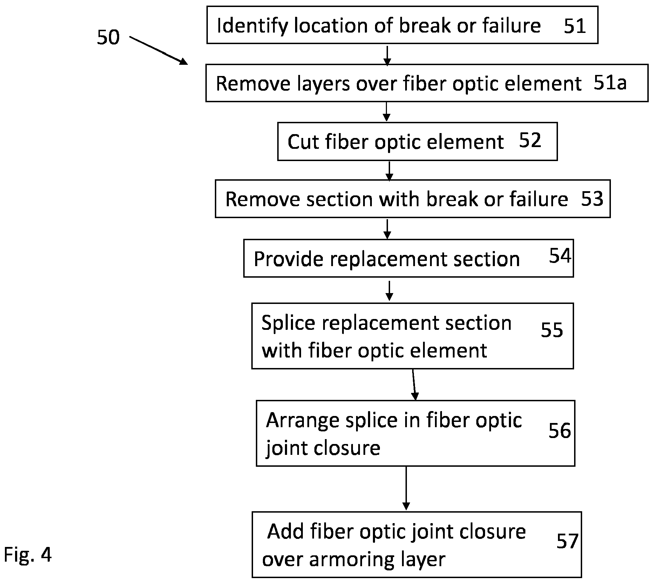

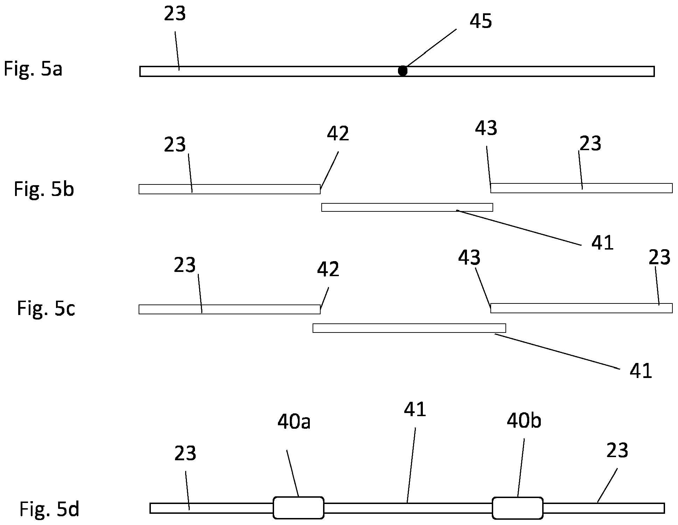

Figure 4 and figures 5a-5f illustrate a method 50 of repairing a fiber optic element 23 in the cable 20, in case of a break or failure. The method comprises the steps of:
Identifying, in step 51, a location 45 of a break or failure in the fiber optic element 23 (see fig. 5a). When the location of a break or failure is identified, any layers over the fiber optic element 23 is removed in step 51a to make access to the fiber optic element 23.

In order to remove and replace the section of fiber optic element 23 comprising the break or failure, two cuts are made in step 52, a first cut 42 of the fiber optic element 23 on a first side of the identified location and a second cut 43 of the fiber optic element 23 on a second side of the identified location. The section with break or failure is then removed in step 53.

In the next step 54, there is provided a replacement section 41 of optical fiber that has a length at least equal to the removed section of fiber optic element 23.

Figure 5b illustrates a replacement section 41 having a length equal to the removed section of fiber optic element between cuts 42, 43.

In some cases, the replacement section 41 is longer than the removed section of fiber optic element, thus producing an overlength. Having an overlength may be advantageous, as it makes it easier to splice the replacement section with the cut ends of fiber optic elements. Figure 5c illustrates a replacement section 41 having an overlength.

The splicing is performed in step 55 by splicing a first end of the replacement section 41 to the first cut of the fiber optic element 23, forming a first spliced region and splicing a second end of the replacement section 41 to the second cut of the fiber optic element 23, forming a second spliced region.

To protect the spliced regions, the first and second spliced regions are arranged in step 56 in a first and second fiber optic joint closures 40a, 40b, respectively. The fiber optic joint closures will be described in more detail below.

If there is formed an overlength of the replacement section 41, this overlength is arranged in one or both of the fiber optic joint closures 40a, 40b. Alternatively, the overlength is distributed between the fiber optic joint closures 40a, 40b.

Figure 5d illustrates the situation after splicing both ends of replacement section 41 to the first 42 and second 43 cuts of the fiber optic element. The two spliced regions thus formed, are arranged in two fiber optic joint closures 40a, 40b, thus providing a repaired fiber optic element.

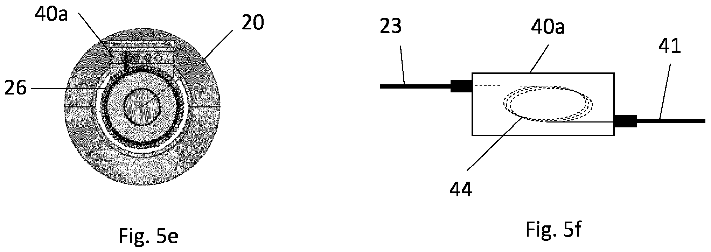

Figure 5f illustrates how an overlength 44 can be arranged within the fiber optic joint closure 40a, by coiling the overlength.

Figure 5e illustrates the situation after the fiber optic joint closure 40a comprising the spliced region has been arranged over the armoring layer 26 and secured to the armoring layer 26.

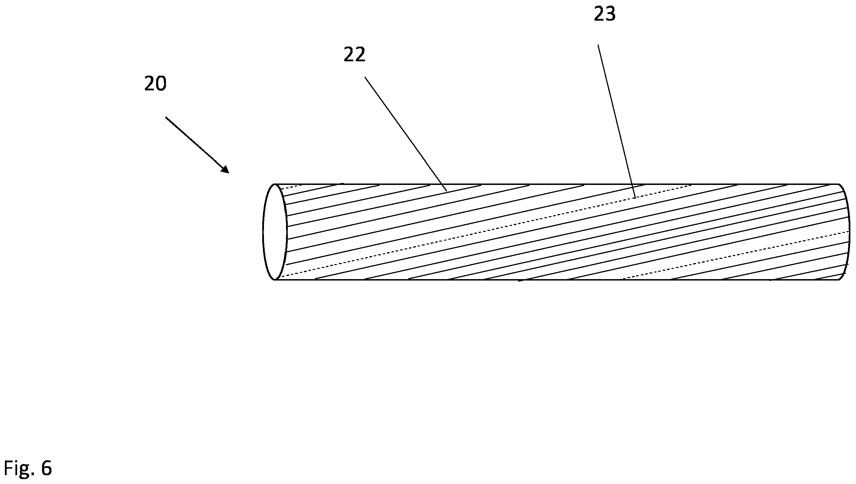

Figure 6 illustrates schematically the result of the above manufacturing process 30. Here, the armoring layer 26 which comprises armoring wires 22 together with at least one fiber optic element 23 has been wound helically around a section of inner layers 21 of a composite electric power cable 20. The helically wound fiber optic element 23 is shown located between helically wound armoring wires 22. The armoring wires 22 and the fiber optic element 23 are arranged in contact with each other to form an enclosed layer around the inner layers of the composite power cable 20.

## Claims

1. A method (30) for manufacturing a composite electric power cable (20), the method (30) comprising the steps of:
- assembling (32) inner layers (21) of the composite electric power cable (20), wherein the inner layers (21) comprise at least one electric conductor (27),
- adding (34) an armoring layer (26) with at least one fiber optic element (23), by winding a plurality of armoring wires (22) helically around the inner layers (21), and winding the at least one fiber optic (23) element between at least two of the armoring wires (22).

2. The method according to claim 1, wherein winding the plurality of armoring wires (22) helically around the inner layers (21) and winding the at least one fiber optic element (23) between at least two of the armoring wires (22) are done simultaneously.

3. The method (30) according to claim 1 or 2, comprising the step of:
- providing the at least one fiber optic element (23) within a tube (25), and wherein the step of adding the armoring layer (26) with at least one fiber optic element (23) is performed by winding the tube (25) helically around the inner layers (21).

4. The method according to claim 3, wherein the step of providing the at least one fiber optic element (23) within a tube (25) comprises providing the at least one fiber optic element (23) within a metallic tube (25).

5. The method according to claim 3 or 4, wherein the tube (25) has an outer diameter of 40% to 120% of the outer diameter of the armoring wires (22).

6. The method according to claim 3 or 4, wherein the tube (25) has an outer diameter of ca. 50% to ca. 100% of the outer diameter of the armoring wires (22).

7. A method (50) for repairing a composite electric power cable (20) manufactured by the method (30) according to any one of the claims 1-6, the method (50) comprising the steps of:
- identifying (51) a location (45) of a break or failure in the fiber optic element (23);
- making (52) a first cut (42) of the fiber optic element (23) on a first side of the identified location (45);
- making (52) a second cut (43) of the fiber optic element (23) on a second side of the identified location (45);
- removing (53) a section of the fiber optic element (23) between the first cut (42) and the second cut (43);
- providing (54) a replacement section (41) of optical fiber having a length at least equal to the removed section of fiber optic element (23);
- splicing (55) a first end of the replacement section (41) to the first cut (42) of the fiber optic element (23), forming a first spliced region;
- splicing (55) a second end of the replacement section (41) to the second cut (43) of the fiber optic element (23), forming a second spliced region;
- arranging (56) a first fiber optic joint closure (40a) over the first spliced region; and
- arranging (56) a second fiber optic joint closure (40b) over the second spliced region.

8. The method according to claim 7, comprising the step of:
- arranging (57) the first and second fiber optic joint closures (40a, 40b) over the armoring layer (26) and securing the first and second fiber optic joint closures to the armoring layer (26) by means of tape or clamps.

9. The method according to claim 7 or 8, wherein the step of providing (54) a replacement section (41) of optical fiber comprises providing a replacement section (41) that is longer than the removed section, forming an overlength of optical fiber, and wherein the overlength is arranged inside at least one of the first and/or second fiber optic joint closures (40a, 40b).

10. A composite electric power cable (20), comprising:
- inner layers (21) comprising at least one electric conductor (27),
- an armoring layer (26) comprising at least one fiber optic element (23),
wherein the armoring layers (26) comprises a plurality of armoring wires (22) wound helically around the inner layers, and wherein at least one of the armoring wires (22) is substituted by the at least one fiber optic element (23).

11. The composite electric power cable (20) according to claim 10, wherein the at least one fiber optic element (23) is arranged within a tube (25), and wherein the tube (25) is wound helically around the inner layers (21).

12. The composite electric power cable according to claim 11, wherein the tube (25) is a metallic tube (25), such as stainless steel or other steel alloy.

13. The composite electric power cable according to claim 11 or 12, wherein the tube (25) has an outer diameter of 40 to 120% of the outer diameter of the armoring wires (22).

14. The composite electric power cable according to claim 11 or 12, wherein the tube (25) has an outer diameter of ca. 50% to ca. 100% of the outer diameter of the armoring wires (22).
